# EUROPEAN PATENT APPLICATION

(11) **EP 4 425 393 A1**
(43) Date of publication of application: **04.09.2024**
(21) Application number: 23200816.9
(22) Date of filing: 29.09.2023
(51) Int. Cl.: G06Q 10/02, G06Q 10/109, G07C 9/00

(54) **INFORMATION PROCESSING SYSTEM, PROGRAM, AND INFORMATION PROCESSING METHOD**

(30) Priority: 01.03.2023 JP 2023030801
(71) Applicant: FUJIFILM Business Innovation Corp., Minato-ku Tokyo (JP)
(72) Inventor: FUNATSU, Akira, Yokohama-shi, Kanagawa (JP); KAWAMURA, Akihide, Yokohama-shi, Kanagawa (JP); NAKAYAMA, Kota, Yokohama-shi, Kanagawa (JP)
(74) Representative: Kurig, Thomas

(57) **Abstract**

An information processing system includes a processor configured to, in a case in which a booth, whose usage time is reserved by a user and which is capable of being used by the user for the usage time, has not been reserved by another user for a period of time before the usage time, permit a use of the booth by the user and validate a setting of wireless communication used by the user in the booth.

## Description

### BACKGROUND OF THE INVENTION

### (i) Field of the Invention

The present invention relates to an information processing system, a program, and an information processing method.

### (ii) Description of Related Art

There is a technique in which a usage time of a booth is reserved by a user and the booth is used by the user for the reserved usage time.

JP2020-188353A discloses a technique in which the setting of wireless communication in a place that can be used by making a reservation is changed depending on a user who has reserved the place.

JP2009-278396A discloses a system that is connected to a wireless communication terminal to authenticate a visitor during entrance, generates a different connection ID for each connection to the wireless communication terminal, transmits information related to the setting of connection to an access point to the wireless communication terminal of the authenticated visitor, and transmits the connection setting information to the access point.

### SUMMARY OF THE INVENTION

However, there is a technique in which wireless communication is used by a communication device provided in a booth. In this case, assuming that the wireless communication can be used only after the reserved usage start time, even in a case in which the user can use the booth at a point of time before the reserved usage time, the user is not able to use the wireless communication in the booth.

An object of the present invention is to provide a technique that enables a user to use wireless communication in a booth, whose usage time is reserved by the user and which can be used by the user for the usage time, even before the usage time.

According to a first aspect of the present disclosure, there is provided an information processing system including a processor configured to, in a case in which a booth, whose usage time is reserved by a user and which is capable of being used by the user for the usage time, has not been reserved by another user for a period of time before the usage time, permit a use of the booth by the user and validate a setting of wireless communication used by the user in the booth.

According to a second aspect of the present disclosure, in the information processing system according to the first aspect, the booth may be capable of being reserved for each reservation unit time, and the period of time before the usage time may be a period of time that is shorter than the reservation unit time.

According to a third aspect of the present disclosure, in the information processing system according to the first aspect, the period of time before the usage time may be a period of time from a point of time when an operation of unlocking the booth by the user is validated to a start time of the usage time.

According to a fourth aspect of the present disclosure, in the information processing system according to any one of the first to third aspects, the setting of the wireless communication may differ depending on the user.

According to a fifth aspect of the present disclosure, in the information processing system according to any one of the first to fourth aspects, the setting of the wireless communication may be a setting unique to the user.

According to a sixth aspect of the present disclosure, there is provided a program causing a computer to, in a case in which a booth, whose usage time is reserved by a user and which is capable of being used by the user for the usage time, has not been reserved by another user for a period of time before the usage time, permit a use of the booth by the user and validate a setting of wireless communication used by the user in the booth.

According to a seventh aspect of the present disclosure, there is provided an information processing method including: in a case in which a booth, whose usage time is reserved by a user and which is capable of being used by the user for the usage time, has not been reserved by another user for a period of time before the usage time, permitting a use of the booth by the user and validating a setting of wireless communication used by the user in the booth.

According to the first aspect, the sixth aspect, or the seventh aspect of the present invention, the user can use wireless communication in the booth, whose usage time is reserved by the user and which can be used by the user for the usage time, even before the usage time.

According to the second aspect of the present invention, it is possible to avoid the overlap between the use of the booth by the user and reservation by another user before the usage time.

According to the third aspect of the present invention, the user can recognize whether or not the booth can be used before the usage time.

According to the fourth aspect of the present invention, the security of wireless communication is improved as compared to a case in which the settings of wireless communication for each user are the same.

According to the fifth aspect of the present invention, the security of wireless communication is improved as compared to a case in which the setting of wireless communication common to each user is used.

### BRIEF DESCRIPTION OF THE DRAWINGS

Exemplary embodiment(s) of the present invention will be described in detail based on the following figures, wherein:
Fig. 1 is a block diagram showing a configuration of an entire system according to an exemplary embodiment;
Fig. 2 is a block diagram showing a configuration of a reservation management apparatus according to the exemplary embodiment;
Fig. 3 is a block diagram showing a configuration of a control device according to the exemplary embodiment;
Fig. 4 is a block diagram showing a configuration of an access point according to the exemplary embodiment;
Fig. 5 is a block diagram showing a configuration of a terminal apparatus according to the exemplary embodiment;
Fig. 6 is a diagram showing an example of a reservation management table;
Fig. 7 is a sequence diagram showing a flow of a process according to Example 1;
Fig. 8 is a sequence diagram showing a flow of a process according to Example 2;
Fig. 9 is a perspective view showing a specific example of a booth;
Fig. 10 is a perspective view showing another specific example of the booth; and
Fig. 11 is a perspective view showing a kit for constructing the booth.

### DETAILED DESCRIPTION OF THE INVENTION

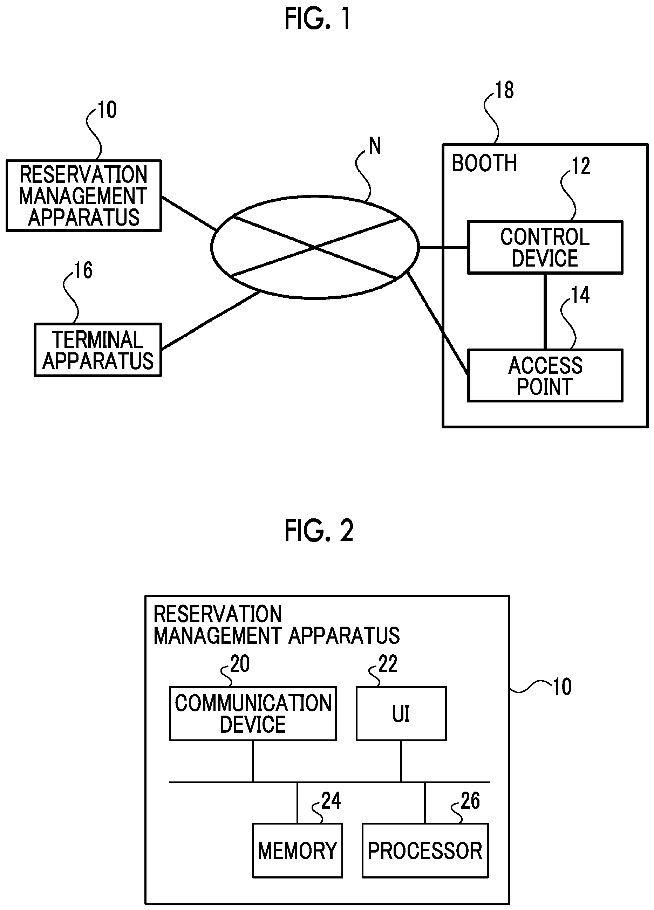

Hereinafter, an entire system according to an exemplary embodiment will be described with reference to Fig. 1. Fig. 1 shows an example of a configuration of the entire system according to the exemplary embodiment.

The entire system according to the exemplary embodiment includes a reservation management apparatus 10, one or more control devices 12, one or more access points 14, and one or more terminal apparatuses 16. The entire system may include apparatuses other than these components.

The reservation management apparatus 10, the control device 12, the access point 14, and the terminal apparatus 16 may communicate with other apparatuses through a communication path N. The communication path N is, for example, a network, such as a local area network (LAN), or the Internet. The communication path N may be constructed by wired communication or may be constructed by wireless communication such as Wi-Fi (registered trademark). The reservation management apparatus 10, the control device 12, the access point 14, and the terminal apparatus 16 are connected to the communication path N by, for example, wireless communication or wired communication and communicate with other apparatuses through the communication path N. The reservation management apparatus 10, the control device 12, the access point 14, and the terminal apparatus 16 may communicate with other apparatuses using, for example, short-range wireless communication, without using the communication path N. Examples of the short-range wireless communication include Bluetooth (registered trademark), a radio frequency identifier (RFID), and NFC.

The reservation management apparatus 10 manages reservations for use of a booth 18. For example, the reservation management apparatus 10 manages the usage time of the booth 18 (that is, the time when the booth 18 is permitted to be used) and a user who has reserved the usage time in association with each other. The usage time is determined by, for example, a date and a period of time. In a case in which a plurality of booths 18 are included in the entire system, the reservation management apparatus 10 associates the usage time with the user for each booth 18 to manage reservations for each booth 18. In a case in which the usage time of the booth 18 has been reserved by the user, the user is permitted to use the booth 18 for the usage time. Other users who have not made a reservation are not permitted to use the booth 18 for the usage time.

The booth 18 is, for example, a private room box, a room, a shelter, or a section that is divided by a partition. For example, the private room box is composed of a ceiling panel, a floor panel, and four wall panels. For example, the room is an office, a conference room, a hotel room, or a section in a building. The booth 18 may be a movable object. For example, members, such as casters, may be provided on the booth 18 such that the booth 18 is moved by an operator or the like. The booth 18 may be provided in a building, such as a station, an airport, an office, a store, or a shopping mall, may be provided in an outdoor area, such as a road or a plaza, may be provided in a vehicle, such as a train, an airplane, or a car, or may be provided in other movable bodies.

The control device 12 controls communication that can be used in the booth 18. The communication may be wireless communication or may be wired communication. For example, the control device 12 controls wireless communication that can be used in the booth 18 through the access point 14. Further, the control device 12 controls the locking of the booth 18. The control device 12 may control electronic devices provided in the booth 18.

The access point 14 is a wireless communication device, wirelessly communicates with an apparatus (for example, the terminal apparatus 16) that uses the access point 14, and connects the apparatus to a communication path such as the communication path N. For example, one or more access points 14 can be used for each booth 18. The access point 14 may be installed in the booth 18 or may be installed around the booth 18. For example, all or a portion of the booth 18 is included in a communicable range of the access point 14 (that is, a range in which radio waves can be transmitted to and received from the access point 14).

For example, the control device 12 is installed in the booth 18 or around the booth 18 and controls the access point 14 that can be used in the booth 18. For example, the control device 12 and the access point 14 are connected by a wired communication path or a wireless communication path, and the control device 12 controls the access point 14 through the wired communication path or the wireless communication path.

In addition, the control device 12 and the access point 14 may be a single device. For example, a single device may be configured by incorporating the access point 14 into the control device 12 or by incorporating the control device 12 into the access point 14.

In a case in which the reservation management apparatus 10 manages reservations for a plurality of booths 18, the control device 12 is installed in each booth 18, and the access point 14 is controlled by the control device 12 in each booth 18. One control device 12 may control a plurality of access points 14 (for example, the access points 14 that are provided in each of the plurality of booths 18). For example, in a case in which a plurality of booths 18 are provided side by side in the same place (for example, in the same building), one control device 12 may control the access points 14 provided in each booth 18.

The terminal apparatus 16 is an apparatus such as a personal computer (hereinafter, referred to as a "PC"), a tablet PC, a smart phone, or a mobile phone. Here, for example, the terminal apparatus 16 is a portable terminal apparatus such as a tablet PC, a smart phone, or a mobile phone.

Hereinafter, a configuration of the reservation management apparatus 10 will be described with reference to Fig. 2. Fig. 2 is a block diagram showing the configuration of the reservation management apparatus 10.

For example, the reservation management apparatus 10 includes a communication device 20, a user interface (UI) 22, a memory 24, and a processor 26.

The communication device 20 includes one or more communication interfaces having, for example, a communication chip and a communication circuit and has a function of transmitting information to other apparatuses and a function of receiving information from other apparatuses. The communication device 20 may have a wireless communication function or a wired communication function.

The UI 22 is a user interface and includes a display and an input device. The display is, for example, a liquid crystal display or an EL display. The input device is, for example, a keyboard, a mouse, input keys, or an operation panel. The UI 22 may be a UI such as a touch panel that includes both the display and the input device. Further, the UI 22 may include a microphone and a speaker.

The memory 24 is a device that constitutes one or more storage areas for storing data. The memory 24 is, for example, a hard disk drive (HDD), a solid state drive (SSD), various types of memories (for example, a RAM, a DRAM, an NVRAM, and a ROM), other storage devices (for example, an optical disk), or combinations thereof.

The processor 26 controls the operation of each unit of the reservation management apparatus 10.

Reservation management information is stored in the memory 24. The reservation management information is information for managing the reservation for each booth 18. For example, the reservation management information is information including booth identification information for identifying the booth 18, usage time information indicating the usage time of the booth, user information for identifying the user who has reserved the booth 18, and wireless communication setting information related to the setting of the wireless communication used in the booth 18. The booth identification information, the usage time information, the user information, and the wireless communication setting information are included in the reservation management information in association with each booth 18.

The booth identification information includes, for example, information indicating a name of the booth 18, an ID of the booth 18, and information indicating a place where the booth 18 is provided (for example, positional information).

The user information is, for example, information indicating a name of the user and an account of the user (for example, a user ID and an e-mail address). The user information may include information (for example, a MAC address, an IP address, and a serial number) for identifying the terminal apparatus 16 used by the user.

The wireless communication setting information includes, for example, information for identifying the access point 14 provided in the booth 18 (for example, a service set identifier (SSID)). The wireless communication setting information may include a password for using wireless communication through the access point 14. The setting of the wireless communication may be different depending on the user. Specifically, the SSID is different depending on the user. That is, even in a case in which the same access point 14 is used, a different SSID is used for each user. For example, the setting of the wireless communication is setting unique to each user, and a unique SSID is used for each user. That is, SSIDs that do not overlap each other are used among a plurality of different users. The wireless communication setting information may be determined by the processor 26 of the reservation management apparatus 10 or may be determined by the control device 12 of the booth 18.

In a case in which the processor 26 receives a request to reserve the use of the booth 18 from the terminal apparatus 16, the processor 26 registers the reservation for the use of the booth 18 in the reservation management information. For example, in a case in which the user operates the terminal apparatus 16 to specify the booth 18 to be used and the usage time and to request the reservation, the processor 26 registers the booth identification information of the booth 18, the usage time information indicating the usage time of the booth 18, the user information indicating the user who has reserved the booth 18, and the wireless communication setting information for the user in the reservation management information to be associated with one another.

For example, the booth 18 may be reserved for each reservation unit time. The reservation unit time may be changed by, for example, an administrator. For example, in a case in which the reservation unit time is set to 15 minutes, the user can reserve the booth 18 in units of 15 minutes. Specifically, the user can reserve the usage time such as "10:00 to 10:15" or "11:00 to 11:30". Of course, the reservation unit time may be, for example, one minute, 30 minutes, or one hour. Further, the reservation unit time may be changed depending on the period of time.

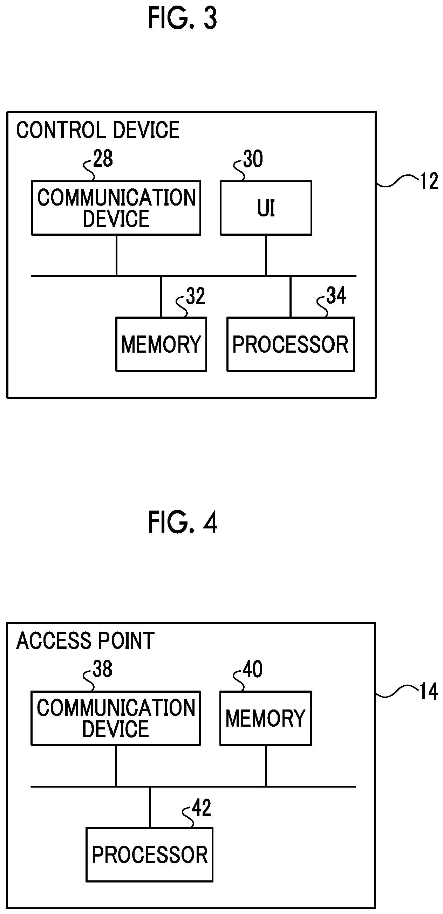

Hereinafter, a configuration of the control device 12 will be described with reference to Fig. 3. Fig. 3 is a block diagram showing the configuration of the control device 12.

The control device 12 includes, for example, a communication device 28, a UI 30, a memory 32, and a processor 34.

The communication device 28 includes one or more communication interfaces having, for example, a communication chip and a communication circuit and has a function of transmitting information to other apparatuses and a function of receiving information from other apparatuses. The communication device 28 may have a wireless communication function or may have a wired communication function.

The UI 30 is a user interface and includes a display and an input device. The display is, for example, a liquid crystal display or an EL display. The input device is, for example, a keyboard, a mouse, input keys, or an operation panel. The UI 30 may be a UI such as a touch panel that has both the display and the input device. Further, the UI 30 may include a microphone and a speaker.

The memory 32 is a device that constitutes one or more storage areas for storing data. The memory 32 is, for example, a hard disk drive (HDD), a solid state drive (SSD), various types of memories (for example, a RAM, a DRAM, an NVRAM, and a ROM), other storage devices (for example, an optical disk), or combinations thereof. For example, wireless setting information (for example, SSID) of the access point 14 is stored in the memory 32.

The processor 34 controls the operation of each unit of the control device 12. For example, the processor 34 controls wireless communication that can be used through the access point 14. Specifically, the processor 34 sets wireless communication to be validated or invalidated. In a case in which the wireless communication is set to be validated, the wireless communication is available. In the case in which the wireless communication is set to be invalidated, the wireless communication is unavailable. For example, the processor 34 sets the wireless communication to be validated in a case in which the start time of the reserved usage time comes.

In addition, the processor 34 controls the locking of the booth 18. For example, the booth 18 is locked by an electronic lock, and the processor 34 controls the electronic locking. For example, the processor 34 releases the electronic lock in a case in which unlocking information indicating an unlocking instruction is received.

Further, even before the reserved usage time, in a case in which there is no reservation by another user for a period of time before the usage time, the processor 34 validates the setting of the wireless communication used by the user who has reserved the usage time. For example, in a case in which there is no reservation by another user for a predetermined period of time before the start time of the usage time, the processor 34 validates the setting of the wireless communication used by the user who has reserved the usage time.

In addition, the processor 26 of the reservation management apparatus 10 may perform the setting of the wireless communication of the access point 14 and the control of the locking of the booth 18. That is, the processor 26 of the reservation management apparatus 10 may set the wireless communication of the access point 14 to be validated or invalidated. Further, the processor 26 may release or fasten the electronic lock of the booth 18.

Hereinafter, a configuration of the access point 14 will be described in detail with reference to Fig. 4. Fig. 4 is a block diagram showing the configuration of the access point 14.

For example, the access point 14 includes a communication device 38, a memory 40, and a processor 42.

The communication device 38 includes one or more communication interfaces having, for example, a communication chip and a communication circuit and has a function of transmitting information to other apparatuses and a function of receiving information from other apparatuses. The communication device 38 has a wireless communication function. The communication device 38 may further have a wired communication function. The communication device 38 is connected to the communication path N by wireless communication or wired communication and communicates with other apparatuses through the communication path N. The communication device 38 wirelessly communicates with the apparatus (for example, the terminal apparatus 16) that uses the access point 14 using, for example, Wi-Fi and connects the apparatus to a communication path such as the communication path N. In addition, the communication device 38 communicates with the control device 12.

The memory 40 is a device that constitutes one or more storage areas for storing data. The memory 40 is, for example, a hard disk drive (HDD), a solid state drive (SSD), various types of memories (for example, a RAM, a DRAM, an NVRAM, and a ROM), other storage devices (for example, an optical disk), or combinations thereof. For example, the wireless setting information is stored in the memory 40.

The processor 42 controls the operation of each unit of the access point 14.

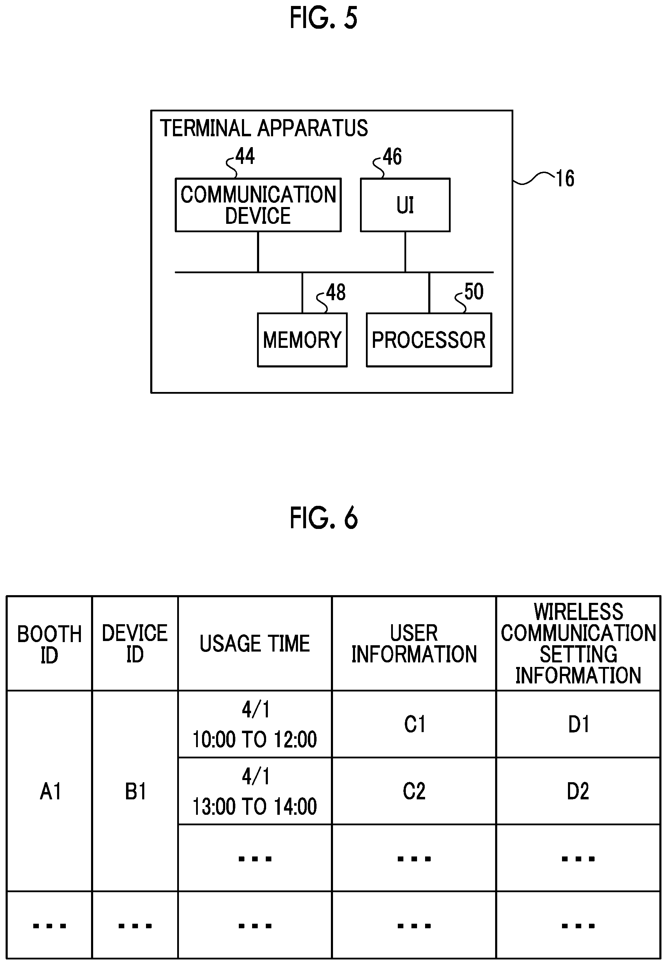

Hereinafter, a configuration of the terminal apparatus 16 will be described with reference to Fig. 5. Fig. 5 is a block diagram showing the configuration of the terminal apparatus 16.

The terminal apparatus 16 includes, for example, a communication device 44, a UI 46, a memory 48, and a processor 50.

The communication device 44 includes one or more communication interfaces having, for example, a communication chip and a communication circuit and has a function of transmitting information to other apparatuses and a function of receiving information from other apparatuses. The communication device 44 may have a wireless communication function or may have a wired communication function.

The UI 46 is a user interface and includes a display and an input device. The display is, for example, a liquid crystal display or an EL display. The input device is, for example, a keyboard, a mouse, input keys, or an operation panel. The UI 46 may be a UI such as a touch panel that has both the display and the input device. Further, the UI 46 may include a microphone and a speaker.

The memory 48 is a device that constitutes one or more storage areas for storing data. The memory 48 is, for example, a hard disk drive (HDD), a solid state drive (SSD), various types of memories (for example, a RAM, a DRAM, an NVRAM, and a ROM), other storage devices (for example, an optical disk), or combinations thereof.

The processor 50 controls the operation of each unit of the terminal apparatus 16.

Hereinafter, an example of the reservation management information will be described with reference to Fig. 6. Fig. 6 is a diagram showing an example of a reservation management table. The reservation management table is an example of the reservation management information and is stored in the memory 24 of the reservation management apparatus 10.

In the reservation management table, a booth ID, a device ID, usage time information, user information, and wireless communication setting information are associated for each booth 18.

The booth ID is an example of the booth identification information for identifying the booth 18. The device ID is an example of device identification information for identifying the control device 12 that controls the access point 14 of the booth 18. The device identification information is predetermined for each control device 12 and is associated with the control device 12 in advance. The device identification information is, for example, an device ID, information indicating the name of the control device 12, or address information (for example, an IP address and a MAC address) of the control device 12.

For example, in a case in which the user reserves the booth 18, the booth ID and the usage time are designated, and the booth ID, the device ID, the usage time information, the user information, and the wireless communication setting information are registered in the reservation management table to be associated with one another.

The reservation management table will be described using a specific example. The control device 12 having a device ID "B1" is provided in the booth 18 having a booth ID "A1". The booth 18 having the booth ID "A1" has been reserved by a user C1. The reserved usage time is from 10:00 to 12:00 on April 1st. Wireless communication setting "D1" (for example, SSID) is set as the setting of the wireless communication used for this usage time. The wireless communication setting D1 for the user C1 is determined by, for example, the reservation management apparatus 10.

Further, the booth 18 having the booth ID "A1" has been reserved by a user C2. The reserved usage time is from 13:00 to 14:00 on April 1st. Wireless communication setting "D2" (for example, SSID) is set as the setting of the wireless communication used for this usage time. The wireless communication setting D2 for the user C2 is determined by, for example, the reservation management apparatus 10.

Hereinafter, a process by the entire system will be described.

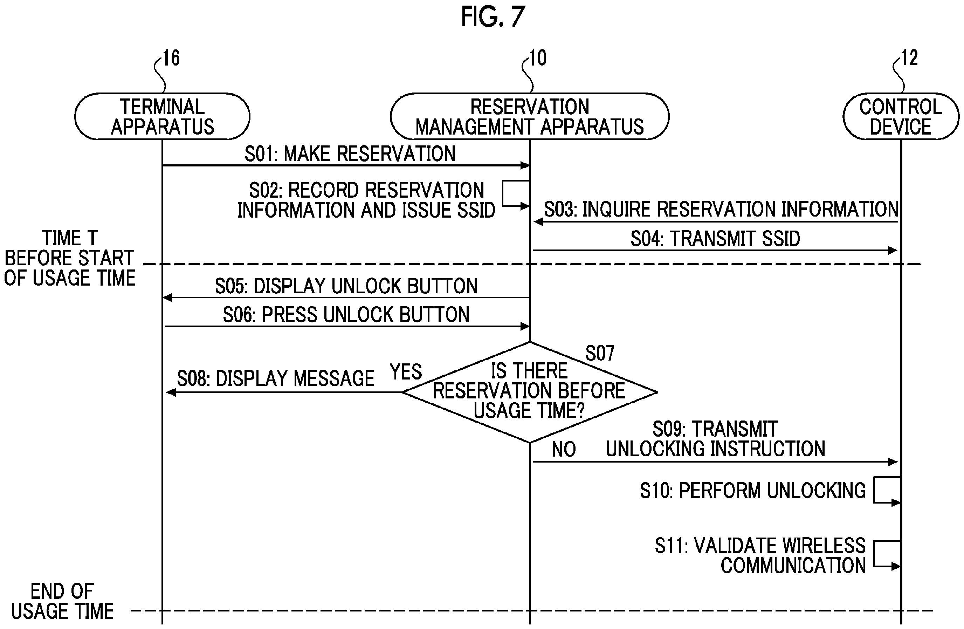

Hereinafter, a process according to Example 1 will be described with reference to Fig. 7. Fig. 7 is a sequence diagram showing a flow of the process according to Example 1.

For example, the booth 18 has a door that can be locked by an electronic lock. In a case in which an unlocking instruction is received, the control device 12 releases the electronic lock.

First, the user operates the terminal apparatus 16 to request the reservation management apparatus 10 to make a reservation for the booth 18 (Step S01).

For example, reservation application software is installed in the terminal apparatus 16. The reservation application software is application software for reserving the booth 18. In a case in which the user starts the reservation application software in the terminal apparatus 16, the processor 50 of the terminal apparatus 16 executes the reservation application software to display a reservation screen on the display of the UI 46 of the terminal apparatus 16. In addition, the processor 50 communicates with the reservation management apparatus 10 through the communication path N and receives information related to each booth 18 (for example, information indicating a reservation status of each booth 18 and an installation location of each booth 18) from the reservation management apparatus 10. The processor 50 displays a list of the booths 18 on the reservation screen. For example, the information indicating the reservation status and installation location of each booth 18 is displayed on the reservation screen. For example, information indicating a period of time for which a reservation has not been made or information indicating a period of time for which a reservation has been made and is not available is displayed as the information indicating the reservation status. The user selects the booth 18 to be reserved from the list of the booths 18 on the reservation screen and selects the usage time to be reserved.

In a case in which the user selects the booth 18 and the usage time and inputs a reservation instruction, the processor 50 of the terminal apparatus 16 transmits reservation request information to the reservation management apparatus 10. The reservation request information includes booth identification information of the booth 18 selected by the user, information indicating the selected usage time, and user information indicating the user.

In a case in which the processor 26 of the reservation management apparatus 10 receives the reservation request information transmitted from the terminal apparatus 16, the processor 26 receives a reservation for the booth 18 and the usage time indicated by the reservation request information and records reservation information (Step S02). In addition, the processor 26 issues wireless communication setting information for the user. For example, the processor 26 issues an SSID unique to the user as the wireless communication setting information for the user. The processor 26 registers the booth identification information of the booth 18 to be reserved, the device ID of the control device 12 installed in the booth 18, the usage time information indicating the usage time to be reserved, the user information of the user who has reserved the booth 18, and the SSID unique to the user in the reservation management table to be associated with one another (see Fig. 6). The reservation is completed by this. Information indicating that the reservation has been completed may be displayed on the reservation screen in the terminal apparatus 16.

In addition, the booth 18 may be reserved through a Web browser, without using the reservation application software, or may be reserved using, for example, e-mail or a social networking service (SNS).

For example, the processor 34 of the control device 12 inquires of the reservation management apparatus 10 about the reservation information of the booth 18, in which the access point 14 controlled by the control device 12 is provided, at a predetermined time interval (Step S03). Information indicating the inquiry is transmitted from the control device 12 to the reservation management apparatus 10.

In a case in which the processor 26 of the reservation management apparatus 10 receives the information indicating the reservation inquiry from the control device 12, the processor 26 checks whether or not the use of the booth 18 controlled by the control device 12 has been reserved with reference to the reservation management table.

In a case in which the booth 18 has been reserved, the processor 26 of the reservation management apparatus 10 transmits the SSID issued for the reservation after the inquiry is made to the control device 12 (Step S04). For example, the processor 26 associates the SSID with the information indicating the usage time for each reservation and transmits the SSID and the information indicating the usage time which correspond to each reservation to the control device 12. The SSID and the information indicating the usage time which correspond to each reservation are stored in the memory 32 of the control device 12 in association with each other.

In a case in which the booth 18 has not been reserved, the processor 26 of the reservation management apparatus 10 may transmit information indicating that the booth 18 has not been reserved to the control device 12.

Further, in a case in which the booth 18 has been reserved, the processor 26 of the reservation management apparatus 10 may transmit the SSID and the information indicating the usage time to the control device 12 that controls the booth 18 even though the inquiry is not received from the control device 12.

The processor 26 of the reservation management apparatus 10 transmits, to the terminal apparatus 16 of the user who has reserved the booth 18 and the usage time, display instruction information indicating an instruction to display an unlock button a time T before (for example, 5 minutes before) the start time of the usage time of the booth 18 (Step S05). For example, the processor 26 specifies the user who has reserved the booth 18 and the usage time with reference to the reservation management table and transmits the display instruction information to the terminal apparatus 16 of the specified user. The unlock button is an image for an instruction to release the electronic lock of the booth 18. In a case in which the display instruction information is received, the processor 50 of the terminal apparatus 16 displays the unlock button on the display of the UI 46. The processor 50 may start the reservation application software to display the unlock button on the display.

In addition, even in a stage before the terminal apparatus 16 receives the display instruction information, the unlock button may be displayed on the display of the terminal apparatus 16, for example, in a grayed-out state. In this case, the user is unable to press the unlock button, or the pressing of the unlock button is invalidated. In a case in which the terminal apparatus 16 receives the display instruction information, for example, the grayed-out state is eliminated, and the pressing of the unlock button is validated. Of course, the unlock button may not be displayed in the stage before the terminal apparatus 16 receives the display instruction information. The unlock button may be displayed in a case in which the terminal apparatus 16 receives the display instruction information.

In a case in which the user operates the terminal apparatus 16 to press the unlock button (Step S06), information indicating that the unlock button has been pressed is transmitted from the terminal apparatus 16 to the reservation management apparatus 10.

In a case in which the processor 26 of the reservation management apparatus 10 receives the information indicating that the unlock button has been pressed from the terminal apparatus 16, the processor 26 checks whether or not the booth 18 has been reserved by another user for a period of time before the usage time with reference to the reservation management table (Step S07).

In a case in which the booth 18 has been reserved by another user for the period of time before the usage time (Step S07, YES), the processor 26 of the reservation management apparatus 10 transmits a message indicating that it is not possible to unlock the booth to the terminal apparatus 16 (Step S08). For example, a message "It is not possible to unlock the booth because the booth has been reserved by another person. Please wait until the start time of the reserved usage time." is transmitted to the terminal apparatus 16. The message is displayed on the display of the UI 46 of the terminal apparatus 16.

In a case in which the booth 18 has not been reserved by another user for the period of time before the usage time (Step S07, NO), the processor 26 of the reservation management apparatus 10 permits the use of the booth 18 by the user who has reserved the usage time. Specifically, the processor 26 transmits unlocking instruction information indicating the release of the electronic lock of the booth 18 to the control device 12 that controls the booth 18 (Step S09).

In a case in which the unlocking instruction information is received, the processor 34 of the control device 12 that controls the booth 18 releases the electronic lock of the booth 18 (Step S10). Therefore, the user can enter the booth 18.

In addition, the processor 34 of the control device 12 validates the setting of the wireless communication of the access point 14 provided in the booth 18 (Step S11). Specifically, the processor 34 sets the SSID unique to the user to the access point 14 and directs the access point 14 to generate radio waves.

The SSID unique to the user may be included in the display instruction information for the unlock button and transmitted to the terminal apparatus 16 of the user, may be transmitted from the reservation management apparatus 10 or the control device 12 to the terminal apparatus 16 of the user in a case in which the electronic lock of the booth 18 is released, or may be transmitted from the reservation management apparatus 10 to the terminal apparatus 16 of the user in a case in which the booth 18 has been reserved.

The user can use wireless communication in the booth 18 using the SSID unique to the user. For example, the user can set the SSID, which has been set in the access point 14, in the terminal apparatus 16 to use wireless communication (for example, Wi-Fi) in the terminal apparatus 16.

In a case in which the usage time has elapsed (that is, in a case in which the usage of the booth 18 by the user for the usage time has ended), the processor 34 of the control device 12 deletes the SSID for the user from the control device 12 and the access point 14.

As described above, in a case in which the same booth 18 has not been reserved for a period of time before the usage time reserved by the user, the user is permitted to use the booth 18, and the setting of the wireless communication used by the user in the booth 18 is validated. Therefore, even for the period of time before the usage time, the user may be able to use the booth 18 and to use wireless communication in the booth 18.

Further, in a case in which the user who has reserved the usage time starts the use of the booth for the period of time before the usage time (for example, in a case in which the electronic lock of the booth is released in Step S09), the processor 26 of the reservation management apparatus 10 prohibits other users from making reservations for the period of time before the usage time. Therefore, for the period of time before the usage time, the overlap between the use of the user who has reserved the usage time and the reservation of other users is prevented.

Hereinafter, Example 1 will be described with reference to Fig. 6 using a specific example. As shown in Fig. 6, the booth A1 has been reserved by the user C1 and the user C2. The usage time of the user C1 is "10:00 to 12:00 on April 1st". The usage time of the user C2 is "13:00 to 14:00 on April 1st".

In a case in which the current time is 12:55, that is, the time is 5 minutes before the start time of the usage time of the user C2, the display instruction information indicating an instruction to display the unlock button is transmitted from the reservation management apparatus 10 to the terminal apparatus 16 of the user C2. The unlock button is displayed on the display of the terminal apparatus 16 of the user C2.

In a case in which the user C2 presses the unlock button on the terminal apparatus 16 of the user C2, information indicating that the unlock button has been pressed is transmitted from the terminal apparatus 16 of the user C2 to the reservation management apparatus 10.

There are no reservations made by other users between 12:55, which is the current time, and 13:00, which is the start time. Therefore, the booth 18 is unlocked. In addition, the setting of the wireless communication used by the user C2 is validated. That is, the SSID unique to the user C2 is set in the access point 14, and the setting of wireless communication is validated. Therefore, the user C2 can enter the booth 18 and use the wireless communication.

The period of time before the usage time may be a period of time shorter than the reservation unit time of the booth 18. For example, in a case in which the reservation unit time is 15 minutes, the period of time before the usage time is set to 5 minutes or the like. In this case, the processor 34 of the control device 12 validates the setting of the wireless communication used by the user (for example, the user C2), who has reserved the usage time, 5 minutes before the start time of the usage time. In addition, the period of time before the usage time may be changed by, for example, the administrator.

The period of time before the usage time may be a period of time from a point of time when the operation of unlocking the booth 18 by the user (for example, the user C2) who has reserved the usage time is validated to the start time of the usage time. For example, the point of time when the operation of unlocking the booth is validated is a point of time when an image (for example, the unlock button) for an instruction to unlock the booth is displayed on the display of the terminal apparatus 16. In the above-described example, in a case in which there are no reservations for the same booth 18 by other users for a period between the point of time when the unlock button is displayed on the display of the terminal apparatus 16 of the user C2 and the start time (for example, 13:00) of the usage time of the user C2, the processor 34 of the control device 12 validates the setting of the wireless communication used by the user C2.

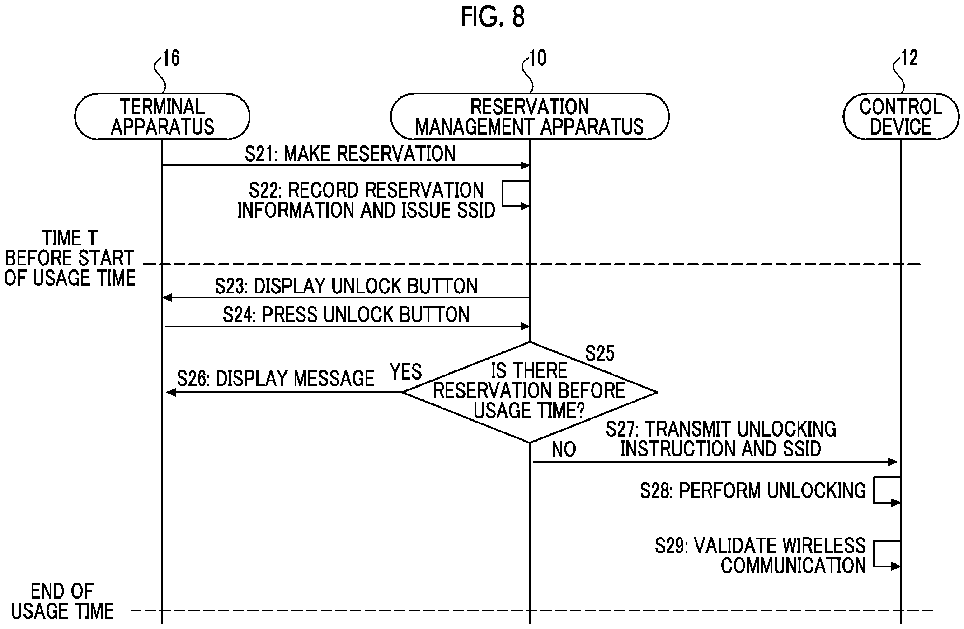

A process according to Example 2 will be described with reference to Fig. 8. Fig. 8 is a sequence diagram showing a flow of the process according to Example 2.

First, as in Step S01 of Example 1, the user operates the terminal apparatus 16 to request the reservation management apparatus 10 to make a reservation for the booth 18 (Step S21).

As in Step S02 of Example 1, the processor 26 of the reservation management apparatus 10 receives a reservation for the booth 18 and the usage time in response to the request from the user and records reservation information (Step S22). In addition, the processor 26 issues the SSID unique to the user.

In Example 2, the processes related to Steps S03 and S04 in Example 1 are not performed.

As in Step S05 of Example 1, the processor 26 of the reservation management apparatus 10 transmits, to the terminal apparatus 16 of the user who has reserved the booth 18 and the usage time, the display instruction information indicating an instruction to display the unlock button the time T before (for example, 5 minutes before) the start time of the usage time of the booth 18 (Step S23).

As in Step S06 of Example 1, in a case in which the user operates the terminal apparatus 16 to press the unlock button (Step S24), information indicating that the unlock button has been pressed is transmitted from the terminal apparatus 16 to the reservation management apparatus 10.

As in Step S07 of Example 1, in a case in which the processor 26 of the reservation management apparatus 10 receives the information indicating that the unlock button has been pressed from the terminal apparatus 16, the processor 26 checks whether or not the booth 18 has been reserved by another user for a period of time before the usage time with reference to the reservation management table (Step S25).

In a case in which the booth 18 has been reserved by another user for the period of time before the usage time (Step S25, YES), the processor 26 of the reservation management apparatus 10 transmits a message indicating that it is not possible to unlock the booth to the terminal apparatus 16 (Step S26). The content of the message is the same as the content of the message transmitted in Step S08 of Example 1.

In a case in which the booth 18 has not been reserved by another user for the period of time before the usage time (Step S25, NO), the processor 26 of the reservation management apparatus 10 permits the use of the booth 18 by the user who has reserved the usage time. Specifically, the processor 26 transmits the unlocking instruction information indicating the release of the electronic lock of the booth 18 and the SSID unique to the user to the control device 12 that controls the booth 18 (Step S27).

In a case in which the unlocking instruction information is received, the processor 34 of the control device 12 that controls the booth 18 releases the electronic lock of the booth 18 (Step S28). Therefore, the user can enter the booth 18.

In addition, the processor 34 of the control device 12 sets the SSID transmitted from the reservation management apparatus 10 in the access point 14 provided in the booth 18 and validates the setting of the wireless communication of the access point 14 (Step S29).

In a case in which the usage time has elapsed (that is, in a case in which the usage of the booth 18 by the user for the usage time has ended), the processor 34 of the control device 12 deletes the SSID for the user from the control device 12 and the access point 14.

In Example 2, as in Example 1, in a case in which the same booth 18 has not been reserved for the period of time before the usage time reserved by the user, the use of the booth 18 by the user is permitted, and the setting of the wireless communication used by the user in the booth 18 is validated.

In addition, a method for unlocking the booth 18 is not limited to the method described in Examples 1 and 2. An unlocking instruction may be given without using the unlock button. For example, the unlocking instruction may be given using near field communication (NFC). Specifically, in a case in which the booth 18 is reserved, unique information (for example, a serial number, a MAC address, or an account) of the terminal apparatus 16 having an NFC function is stored in the reservation management apparatus 10. Then, the unique information is transmitted from the reservation management apparatus 10 to the control device 12. For example, the unique information is transmitted to the control device 12 together with the SSID. In a case in which a communication device having the NFC function is provided outside the booth 18 and the terminal apparatus 16 approaches the communication device, the unique information of the terminal apparatus 16 is transmitted from the terminal apparatus 16 to the communication device. The processor 34 of the control device 12 of the booth 18 collates the unique information received by the communication device with the unique information stored in the control device 12. In a case in which the unique information items are matched with each other, the processor 34 releases the electronic lock of the booth 18. In a case in which the unique information items are not matched with each other, the processor 34 does not release the electronic lock of the booth 18.

A password may be used to validate the setting of the wireless communication of the access point 14. This password may be input to the access point 14 by the user, or may be transmitted from the reservation management apparatus 10 to the control device 12 together with the SSID and then automatically set in the access point 14. For example, in a case in which the booth 18 is reserved, the password may be transmitted from the reservation management apparatus 10 to the terminal apparatus 16 and then presented to the user.

Further, in a case in which the user does not use the booth 18 before the usage time and the start time of the usage time comes, the processor 34 of the control device 12 may validate the setting of the wireless communication of the access point 14 even though there is no instruction from the user. As another example, in a case in which the start time of the usage time comes and the electronic lock of the booth 18 is released, the processor 34 may validate the setting of the wireless communication of the access point 14 even though there is no instruction from the user. After the start time of the usage time comes, the processor 34 may validate the setting of the wireless communication of the access point 14 in response to an instruction from the user. Further, after the start time of the usage time comes and the electronic lock of the booth 18 is released, the processor 34 may validate the setting of the wireless communication of the access point 14 in response to an instruction from the user.

In addition, for the reserved usage time, the user who has reserved the usage time may leave the booth 18 and re-enter the booth 18.

The configuration of the entire system according to the above-described exemplary embodiment is just an example, and the entire system may have any configuration as long as the above-described process can be achieved. That is, some or all of the functions of the reservation management apparatus 10 may be implemented by the control device 12, the terminal apparatus 16, or another apparatus, and some or all of the functions of the control device 12 may be implemented by the reservation management apparatus 10, the terminal apparatus 16, or another apparatus.

An information processing system may be configured by the reservation management apparatus 10 and the control device 12. Further, in a case in which some of the functions of the reservation management apparatus 10 are implemented by another apparatus, the information processing system may be configured by the reservation management apparatus 10 and the apparatus. That is, the functions of the reservation management apparatus 10 may be implemented by a single apparatus or by the information processing system including a plurality of apparatuses. Similarly, in a case in which some of the functions of the control device 12 are implemented by another apparatus, the information processing system may be configured by the control device 12 and the apparatus. That is, the functions of the control device 12 may be implemented by a single apparatus or by an information processing system including a plurality of apparatuses.

### (Specific Example of Booth 18)

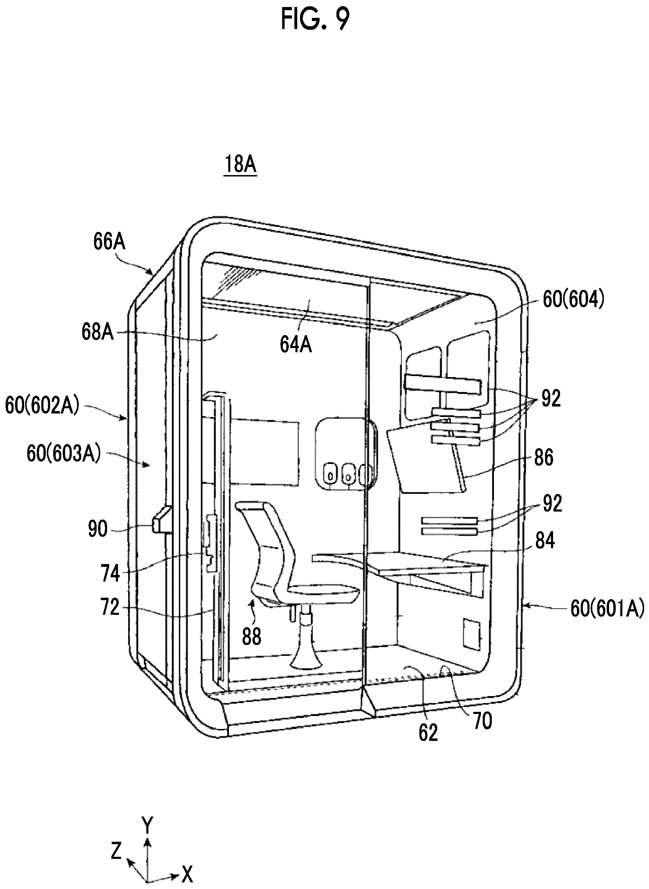

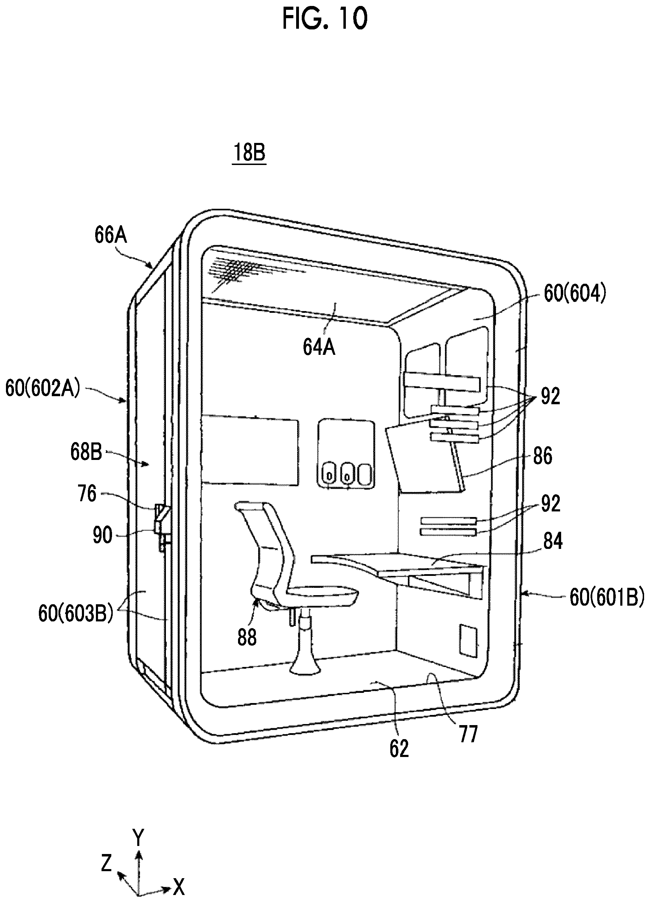

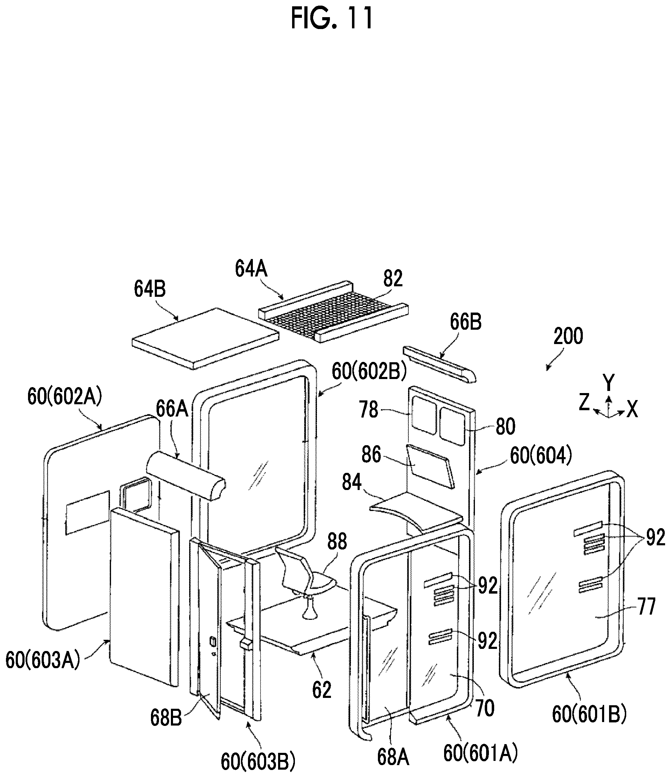

Hereinafter, a specific example of the booth 18 will be described with reference to Figs. 9 to 11. Fig. 9 is a perspective view showing a booth 18A. Fig. 10 is a perspective view showing a booth 18B. The booth 18Ais a specific example of the booth 18, and the booth 18B is another specific example of the booth 18. Fig. 11 is a perspective view showing a kit 200 for constructing the booths 18A and 18B. In Figs. 9 to 11, a three-dimensional orthogonal coordinate system is defined by the X-axis, the Y-axis, and the Z-axis that are orthogonal to one another.

As shown in Figs. 9 and 10, each of the booths 18A and 18B includes a side wall 60, a floor material 62, a ceiling material 64, and a corner material 66. A space surrounded by a plurality of side walls 60 is formed inside the booths 18A and 18B. A door 68 is provided on the side wall 60. The booths 18A and 18B may be installed indoors or outdoors.

The side wall 60 is composed of four divided side walls of a front wall 601, a back wall 602, a left side wall 603, and a right side wall 604.

The booth 18A includes a front wall 601A as the front wall 601. A door 68A is provided on the front wall 601A. The booth 18A includes a left side wall 603A as the left side wall 603. The door is not provided on the left side wall 603A. The booth 18B includes a front wall 601B as the front wall 601. The door is not provided on the front wall 601B. The booth 18B includes a left side wall 603B as the left side wall 603. A door 68B is provided on the left side wall 603B.

Fig. 11 shows the kit 200. The kit 200 includes the side wall 60, the floor material 62, the ceiling material 64, and the corner material 66. The front wall 601, the back wall 602, the left side wall 603, and the right side wall 604 are used as the side walls 60. For example, the booths 18A and 18B are constructed by connecting members included in the kit 200 with fixing members such as bolts and nuts. Of course, all or some of the side wall 60, the floor material 62, the ceiling material 64, and the corner material 66 may be integrated members.

In order to construct the booth 18A, the front wall 601A is used as the front wall 601, the back wall 602A is used as the back wall 602, the left side wall 603A is used as the left side wall 603, and the right side wall 604 is used. A back wall 602B may be used instead of the back wall 602A.

In order to construct the booth 18B, the front wall 601B is used as the front wall 601, the back wall 602A is used as the back wall 602, the left side wall 603B is used as the left side wall 603, and the right side wall 604 is used. The back wall 602B may be used instead of the back wall 602A.

In the booths 18A and 18B, either a ceiling material 64A or a ceiling material 64B is used as the ceiling material 64. Further, in the booths 18A and 18B, the floor material 62 and corner materials 66A and 66B are used.

The booth 18A is composed of the front wall 601A, the back wall 602A (or the back wall 602B), the left side wall 603A, the right side wall 604, the floor material 62, and the ceiling material 64A. For example, the booth 18A is a booth appropriate for use conditions in which the door is required to be on the front side. The ceiling material 64B may be used instead of the ceiling material 64A.

The booth 18B is composed of the front wall 601B, the back wall 602A (or the back wall 602B), the left side wall 603B, the right side wall 604, the floor material 62, and the ceiling material 64A. For example, the booth 18B is a booth appropriate for usage conditions in which the door is required to be on the left side surface. The ceiling material 64B may be used instead of the ceiling material 64A.

The front wall 601Ais composed of a fixed front portion 70, the door 68A, and an outer peripheral frame that surrounds the fixed front portion 70 and the door 68A. For example, the fixed front portion 70 is provided on the right side of the front wall 601A as the front wall 601A is viewed from the front side. The door 68A is provided on the left side of the front wall 601A as the front wall 601A is viewed from the front side.

For example, the fixed front portion 70 may be made of a colorless transparent member or a colored transparent member (for example, a resin or glass (for example, tempered glass)) or may be made of an opaque member (for example, metal, a resin, or wood). The door 68A may be made of a colorless transparent member or a colored transparent member or may be made of an opaque member.

As shown in Fig. 9, the door 68A is a sliding door that can be reciprocated and moved between a left side portion of the front wall 601A and the back side of the fixed front portion 70. The door 68A includes a grip portion 72 and a locking portion 74. The grip portion 72 is a member, such as a handle, that is provided at a left end portion of the door 68A and protrudes to the outside and the inside. The locking portion 74 is, for example, an electronic lock.

The front wall 601B is composed of a fixed front portion 77 and an outer peripheral frame. The door is not provided on the fixed front portion 77. For example, the fixed front portion 77 may be made of a colorless transparent member or a colored transparent member or may be made of an opaque member.

The back wall 602A is an opaque back wall. For example, the back wall 602A is composed of a skeleton material, an inner surface material that is attached to the inside of the skeleton material, and an outer surface material that is attached to the outside of the skeleton material. The inner surface material and the outer surface material are made of an opaque member.

The back wall 602B is a colorless transparent back wall or a colored transparent back wall. The back wall 602B is composed of a skeleton material, an inner surface material that is attached to the inside of the skeleton material, and an outer surface material that is attached to the outside of the skeleton material. The inner surface material and the outer surface material are made of a transparent member.

The left side wall 603A is an opaque wall. For example, the left side wall 603A is composed of a skeleton material, an inner surface material that is attached to the inside of the skeleton material, and an outer surface material that is attached to the outside of the skeleton material. The inner surface material and the outer surface material are made of an opaque member.

The left side wall 603B is a wall provided with the door 68B. The left side wall 603B is composed of an outer surface material and the door 68B that is provided inside an outer peripheral material. The door 68B is a transparent or opaque door. A grip portion 76, such as a handle, and a locking portion, such as an electronic lock, are provided on the door 68B.

The right side wall 604 is an opaque wall. For example, the right side wall 604 is composed of a skeleton material, an inner surface material that is attached to the inside of the skeleton material, and an outer surface material that is attached to the outside of the skeleton material. The inner surface material and the outer surface material are made of an opaque member.

For example, accommodation portions 78 and 80 are provided on an inner surface of the right side wall 604. The tops of the accommodation portions 78 and 80 are open, and a space for accommodating, for example, equipment is formed inside the accommodation portions 78 and 80. A vent may be formed in, for example, the right side wall 604.

The floor material 62 is a plate material that is made of a material such as metal, resin, or wood. An adjuster for adjusting the height of the floor material 62 may be provided on the floor material 62. Further, casters may be provided at the four corners of a lower surface of the floor material 62.

The ceiling material 64A is an open-type ceiling material. For example, the ceiling material 64A is composed of an outer peripheral frame and an opening-type member 82 that is attached to an opening of the outer peripheral frame. The opening-type member 82 is made of a material such as metal or resin having a plurality of openings formed therein. For example, a member, such as a lattice panel or a mesh panel, is used as the opening-type member 82. The opening-type member 82 functions as a ventilation portion and also functions as a light collection portion.

The ceiling material 64B is a closed-type ceiling material. For example, the ceiling material 64B is composed of a skeleton material, an inner surface material that is provided on a lower surface side of the skeleton material, and an outer surface material that is provided on an upper surface side of the skeleton material.

Hereinafter, equipment provided in the booths 18A and 18B will be described.

For example, a desk top plate 84 and a display 86 are provided on the inner surface of the right side wall 604. The desk top plate 84 may be provided in a fixed state or may be a plate that can be folded and accommodated. The display 86 is connected to a device, such as a notebook PC or a tablet PC, that is carried by the user and displays an image. For example, the display 86 is attached such that the angle or orientation thereof in a vertical direction or a horizontal direction can be adjusted.

Electrical devices may be provided in the accommodation portions 78 and 80. For example, the electrical devices are a wired or wireless router, a communication device, such as a gateway, power supply devices such as a power distributor and a transformer, and a power management device. The control device 12 and the access point 14 may be provided in the accommodation portions 78 and 80.

Of course, the electrical devices may not be accommodated in the accommodation portions 78 and 80, but may be provided inside the booths 18A and 18B or outside the booths 18A and 18B. For example, the electrical device may be provided on the floor material 62 or may be attached to an inner surface or an outer surface of the side wall 60. The control device 12 and the access point 14 may also be provided on the floor material 62 or may be attached to the inner surface or the outer surface of the side wall 60.

Connection taps may be provided on a portion of the inner surface of the right side wall 604 or on both sides of the desk top plate 84. The connection tap is an electrical device for power supply or connection to a connection terminal. A ventilation fan may be provided in the vent.

A chair 88 is provided on the upper surface of the floor material 62. The chair 88 is a chair on which the user, who uses the booths 18A and 18B, sits. The chair 88 may be fixed to the floor material 62 or may not be fixed to the floor material 62. The chair 88 may be disposed and fixed at a position where the user sits facing the desk top plate 84 or the display 86.

A detector and a fire extinguishing agent discharging portion may be provided on the ceiling materials 64A and 64B. A fire extinguishing agent supply device may be provided on the ceiling materials 64A and 64B or the back walls 602A and 602B. For example, the detector is a smoke detector or a heat detector and is attached to the inner surfaces of the ceiling materials 64A and 64B. A human detection sensor may be provided in the detector or may be provided on the inner surfaces of the ceiling materials 64A and 64B. For example, the fire extinguishing agent discharging portion is a nozzle that discharges a fire extinguishing agent and is attached to the inner surfaces of the ceiling materials 64A and 64B. The fire extinguishing agent supply device discharges the fire extinguishing agent from the fire extinguishing agent discharging portion on the basis of information detected by the detector. A lighting fixture is provided on the inner surfaces of the ceiling materials 64A and 64B. The lighting fixture illuminates an internal space of the booths 18A and 18B.

In addition, for example, an advertisement may be displayed on the front wall 601, the back wall 602, the left side wall 603, or the right side wall 604. For example, a display may be provided on the front wall 601, the back wall 602, the left side wall 603, or the right side wall 604, and an advertisement may be displayed on the display.

A panel unit may be provided on the front wall 601, the back wall 602, the left side wall 603, or the right side wall 604. For example, a switch for performing an operation of turning on and off the lighting fixture, a switch for performing illuminance adjustment, a switch for performing an operation of turning on and off the electrical device, and a switch for adjusting the operation of the electrical device are provided in the panel unit.

A display input box 90 is provided on the left side walls 603A and 603B. The display input box 90 is a device having, for example, display, input, and reading functions. Further, the display input box 90 may include, for example, an authentication unit that authenticates the user and a payment unit for the user to pay a fee. For example, the display input box 90 may communicate with the apparatus using NFC. For example, the display input box 90 communicates with the terminal apparatus 16 of the user during authentication, payment, or the like and transmits and receives information for authentication, information for payment, or the like to and from the terminal apparatus 16.

Further, in a case in which the front walls 601A and 601B are made of a transparent member, a line-of-sight blocking sheet or film 92 may be attached to the inner surfaces of the front walls 601A and 601B. In this case, the line of sight of a passerby is blocked.

As described above, the booths 18A and 18B may be provided indoors or outdoors.

Examples of the indoor area include a room of a building, a corridor, a common space, an empty floor, and a stair landing. Examples of the building include a structure, a tenant, a hospital, a bank, a school building, a public facility, a factory, a laboratory, and an apartment house.

Examples of the outdoor area include a station yard, a concourse, a station square, an exhibition hall, an airport, a shopping mall passage, an open space, a waiting room, a vacant space, building premises, an arcade, an office district, an underground passage, a construction site, a sideway, a vacant lot, a park, and an athletic field.

The booths 18A and 18B may be used on an hourly basis and free of charge after the use of the booths 18A and 18B is reserved or may be used on an hourly basis and for a fee.

A plurality of booths 18A may be arranged and connected, or a plurality of booths 18B may be arranged and connected. The booth 18A and the booth 18B may be connected to each other.

For example, it is assumed that business work, study work, and the like are performed in the booths 18A and 18B. However, work other than these may be performed.

Further, the booths 18A and 18B may be moved using the casters provided on the floor material 62. The booths 18A and 18B may be fixed at the installation location by a fixing jig such as an anchor.

The booths 18A and 18B may be assembled at a factory or the like and transported to the location or may be assembled at the installation location. For example, the booths 18A and 18B may be assembled by carrying the kit 200 to the installation location and connecting the members included in the kit 200 at the installation location.

Each of the functions of the reservation management apparatus 10, the control device 12, the access point 14, and the terminal apparatus 16 is implemented, for example, by cooperation between hardware and software. For example, the processor 26 of the reservation management apparatus 10 reads a program stored in the memory and executes the program to implement each of the functions of the reservation management apparatus 10. The program is stored in the memory via a recording medium, such as a CD or a DVD, or via a communication path, such as a network. For example, the processor 34 of the control device 12 reads a program stored in the memory and executes the program to implement each of the functions of the control device 12. The program is stored in the memory via a recording medium, such as a CD or a DVD, or via a communication path, such as a network. Similarly, the processor 42 of the access point 14 reads a program stored in the memory and executes the program to implement each of the functions of the access point 14. The program is stored in the memory via a recording medium, such as a CD or a DVD, or via a communication path, such as a network. For example, the processor 50 of the terminal apparatus 16 reads a program stored in the memory and executes the program to implement each of the functions of the terminal apparatus 16. The program is stored in the memory via a recording medium, such as a CD or a DVD, or via a communication path, such as a network.

In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device). In the embodiments above, the term "processor" is broad enough to encompass one processor or plural processors in collaboration which are located physically apart from each other but may work cooperatively. The order of operations of the processor is not limited to one described in the embodiments above, and may be changed.

### Supplementary Note

(((1))) An information processing system comprising:
   a processor configured to:
   in a case in which a booth, whose usage time is reserved by a user and which is capable of being used by the user for the usage time, has not been reserved by another user for a period of time before the usage time, permit a use of the booth by the user and validate a setting of wireless communication used by the user in the booth.
(((2))) The information processing system according to (((1))),
   wherein the booth is capable of being reserved for each reservation unit time, and
   the period of time before the usage time is a period of time that is shorter than the reservation unit time.
(((3))) The information processing system according to (((1))),
   wherein the period of time before the usage time is a period of time from a point of time when an operation of unlocking the booth by the user is validated to a start time of the usage time.
(((4))) The information processing system according to any one of (((1))) to (((3))),
   wherein the setting of the wireless communication differs depending on the user.
(((5))) The information processing system according to any one of (((1))) to (((4))),
   wherein the setting of the wireless communication is a setting unique to the user.
(((6))) A program causing a computer to:
   in a case in which a booth, whose usage time is reserved by a user and which is capable of being used by the user for the usage time, has not been reserved by another user for a period of time before the usage time, permit a use of the booth by the user and validate a setting of wireless communication used by the user in the booth.

According to the information processing system according to (((1))) or the program according to (((6))), the user is able to use wireless communication in the booth, whose usage time is reserved by the user and which can be used by the user for the usage time, even before the usage time.

According to the information processing system according to (((2))), it is possible to avoid the overlap between the use of the booth by the user and reservation by another user before the usage time.

According to the information processing system according to (((3))), the user is able to recognize whether or not the booth can be used before the usage time.

According to the information processing system according to (((4))), the security of wireless communication is improved as compared to a case in which the settings of wireless communication for each user is the same.

According to the information processing system according to (((5))), the security of wireless communication is improved as compared to a case in which the setting of wireless communication common to each user is used.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

10: reservation management apparatus
12: control device
14: access point
16: terminal apparatus
18, 18A, 18B: booth

## Claims

1. An information processing system comprising:
a processor configured to:
in a case in which a booth, whose usage time is reserved by a user and which is capable of being used by the user for the usage time, has not been reserved by another user for a period of time before the usage time, permit a use of the booth by the user and validate a setting of wireless communication used by the user in the booth.

2. The information processing system according to claim 1,
wherein the booth is capable of being reserved for each reservation unit time, and
the period of time before the usage time is a period of time that is shorter than the reservation unit time.

3. The information processing system according to claim 1,
wherein the period of time before the usage time is a period of time from a point of time when an operation of unlocking the booth by the user is validated to a start time of the usage time.

4. The information processing system according to any one of claims 1 to 3,
wherein the setting of the wireless communication differs depending on the user.

5. The information processing system according to any one of claims 1 to 4,
wherein the setting of the wireless communication is a setting unique to the user.

6. A program causing a computer to:
in a case in which a booth, whose usage time is reserved by a user and which is capable of being used by the user for the usage time, has not been reserved by another user for a period of time before the usage time, permit a use of the booth by the user and validate a setting of wireless communication used by the user in the booth.

7. An information processing method comprising:
in a case in which a booth, whose usage time is reserved by a user and which is capable of being used by the user for the usage time, has not been reserved by another user for a period of time before the usage time, permitting a use of the booth by the user and validating a setting of wireless communication used by the user in the booth.
